(19) Europäisches Patentamt / European Patent Office / Office européen des brevets

(11) **EP 1 920 269 B1**

(12) **EUROPÄISCHE PATENTSCHRIFT**

(45) Veröffentlichungstag und Bekanntmachung des Hinweises auf die Patenterteilung:
**31.12.2008 Patentblatt 2009/01**

(21) Anmeldenummer: **06723057.3**

(22) Anmeldetag: **17.02.2006**

(51) Int Cl.:
*G01S 15/89* ^(2006.01)     *G01S 7/62* ^(2006.01)

(86) Internationale Anmeldenummer:
**PCT/EP2006/001461**

(87) Internationale Veröffentlichungsnummer:
**WO 2007/025572 (08.03.2007 Gazette 2007/10)**

(54) **VERFAHREN ZUM ERZEUGEN EINES SONARBILDES**

METHOD FOR PRODUCING A SONAR IMAGE

PROCEDE DE PRODUCTION D'UNE IMAGE DE SONAR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.09.2005 DE 102005041390**

(43) Veröffentlichungstag der Anmeldung:
**14.05.2008 Patentblatt 2008/20**

(73) Patentinhaber: **ATLAS ELEKTRONIK GMBH
28305 Bremen (DE)**

(72) Erfinder:
- **KUMMERT, Anton
  45549 Sprockhöve (DE)**
- **BOSCHEN, Fritz
  42899 Remscheid (DE)**
- **RATHJEN, Dirk
  28357 Bremen (DE)**

(74) Vertreter: **Wasiljeff, Johannes M.B.
Jabbusch Arendt & Siekmann
Patentanwälte
Otto-Lilienthal-Strasse 25
28199 Bremen (DE)**

(56) Entgegenhaltungen:
**WO-A-02/059645          US-A- 5 596 549
US-B1- 6 738 009          US-B1- 6 897 802**

- **DOUGLAS B L ET AL: "A Multiple-receiver Synthetic-aperture Active Sonar Imaging System" MASTERING THE OCEANS THROUGH TECHNOLOGY. NEWPORT, RHODE ISLAND, OCT. 26 - 29, 1992, PROCEEDINGS OF THE OCEANS CONFERENCE, NEW YORK, IEEE, US, Bd. VOL. 2, 26. Oktober 1992 (1992-10-26), Seiten 300-305, XP010106929 ISBN: 0-7803-0838-7**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Erzeugen eines Sonarbildes von einem Unterwasserareal der im Oberbegriff des Anspruchs 1 definierten Gattung.

Ein bekanntes, auf Ultraschallbasis arbeitendes Sonarsystem zur Erzeugung eines Abbildes eines Unterwasserareals (US 4 288 866) benutzt Schallimpulse mit einem großen Zeit-Bandbreiten-Produkt für eine gute Entfernungsauflösung und einen Bildspeicher, der als dreidimensionale Datenbasis der Objektreflexionen organisiert ist. Ein Schallsender sendet einen Pseudo-Random-Impuls aus, und ein Schallempfänger erfasst die von Objekten reflektierten Schallimpulse als Echosignale. Ein dem Schallempfänger nachgeschalteter Multibeamformer oder Richtungsbildner, der in einem Empfangssektor der Unterwasserantenne eine Anzahl von fächerartig aufgespannten Beams oder Richtcharakteristiken aufspannt, gibt eine Vielzahl von Echos für jeweils eine Winkelauflösungszelle aus, deren horizontale Breite durch den horizontalen Öffnungswinkel des Beams bzw. der Richtcharakteristik bestimmt ist. Die Echosignale werden in Korrelatoren mit einem gespeicherten Muster des Schallimpulses korreliert, an deren Ausgänge für Winkelauflösungszellen zeitkomprimierte Impulse anstehen. Ein Bildspeicher übernimmt die Ausgangsimpulse der Korrelatoren und generiert eine dreidimensionale Datenbasis der Echos in Form eines Satzes von Konturlinien für jede Entfernungszelle. Mittels Standardcomputergrafiktechnik wird aus der dreidimensionalen Datenbasis ein optisches Bild erzeugt, das den Operator unterstützt, ein Objekt zu identifizieren.

Es ist bekannt, zur Identifizierung von Seeminen diese sog. Breitband-Sonar-Transducer-Technologie mit einer Signalverarbeitung für Schallreflexions-Tomographie zu verknüpfen, um hochauflösende Bilder von Seeminen aus einem Sicherheitsabstand von 100m bis 200m zu erhalten (Brian G. Ferguson "Application of acoustic reflection tomography to sonar imaging", J. Acoust. Soc. Am. 117(5), May 2005, Seite 2915 bis 2928). Hierzu muss das das Sonar tragende Wasserfahrzeug die auf herkömmliche Weise, z.B. mittels eines Minenjagdsonars, detektierte und klassifizierte Mine umfahren, damit das Sonar von der Mine reflektierte Echosignale aus unterschiedlichen Aspektwinkeln empfangen kann. Mittels tomographischer Rekonstruktions-Algorithmen wird aus den empfangenen Echosignalen ein zweidimensionales Bild von der Form der Mine erzeugt.

Bei einem bekannten Verfahren zur Erzeugung eines die Struktur einer Unterwasserumgebung repräsentierenden, dreidimensionalen Bildes mittels eines Sonars (US 5 200 931) wird das Unterwassergebiet in eine Vielzahl von in Reihen und Spalten aneinander angeordneten, gleichen Kuben unterteilt und jedem Kubus ein Speicherplatz in einem separaten Speicher zugeordnet. In dem Speicher wird ein Histogramm von Rückstreu- oder Reflexionsdaten des Sonars zu jedem Zeitpunkt, in dem ein Rückstreusignal, das von einem einem Kubus zugeordneten Volumen herrührt, detektiert wird, aufgebaut. Der Kubus in jeder Reihe und Spalte, der die höchste Wahrscheinlichkeit aufweist, der Ort der Rückstreuung in der Unterwasserumgebung zu sein, wird bestimmt, und die bestimmten Kuben werden mit Standard-Bildgenerierungs-Technik zu einer Karte der Unterwasserumgebung zusammengestellt.

Ein bekanntes Multibeam-Synthetik-Apertur-Sonar (WO 02/059645 A2) weist einen Sonarprojektor, der Sonarsignale aussendet, und einen Multibeam-Sonarempfänger auf, der reflektierte Sonarsignale empfängt, die durch Reflexion der ausgesendeten Sonarsignale an Objekten in einem Unterwasserareal, die von dem Sonarprojektor "beleuchtet" werden, entstehen. Einem Synthetik-Apertur-Sonar-Prozessor werden die Ausgangssignale des Multibeam-Sonarempfängers und die Daten des Sendesignals vom Sonarprojektor zugeführt. Der Prozessor verarbeitet diese Signale und Daten unter Verwendung von Synthetik-Apertur-Algorithmen. Das Sonarsystem weist ferner einen Interferometrie-Prozessor auf, der die Ausgangsdaten des Synthetik-Apertur-Sonar-Prozessors unter Verwendung von interferometrischen Algorithmen verarbeitet, um eine verbesserte vertikale Auflösung zu erreichen.

Bei einem bekannten Verfahren zur automatischen Zielerkennung mittels eines Synthetik-Apertur-Radars (SAR) (US 6 897 802 B1) werden die Radarechos zu Pixel verarbeitet und die gespeicherten Pixel vorverarbeitet, um ein Ziel zu extrahieren. Auf das extrahierte Ziel wird für eine erste und zweite Klassifizierung des Ziels ein erster und zweiter Erkennungs-Algorithmus angewendet und die beiden Klassifizierungsergebnisse miteinander fusioniert, um das extrahierte Ziel zu identifizieren.

Der Erfindung liegt die Aufgabe zugrunde, ein Verfahren zum Erzeugen eines Sonarbildes anzugeben, mit dem ein großes Unterwasserareal systematisch mit hoher Ortsauflösung gescannt werden kann, die unabhängig ist von dem Öffnungswinkel und/oder der Anzahl der innerhalb des Empfangssektors ausgebildeten Beams oder Richtcharakteristiken.

Die Aufgabe ist erfindungsgemäß durch die Merkmale im Anspruch 1 gelöst.

Das erfindungsgemäße Verfahren hat den Vorteil, dass ein beliebig großes Unterwasserareal hochauflösend abgetastet werden kann, so dass Objekte im Unterwasserareal und/oder die Oberfläche des Bodens des Unterwasserareals konturenmäßig sehr detailliert erfasst werden. Hierzu ist eine quasi geradlinige Fahrt des die Sende- und Empfangsantenne tragenden Wasserfahrzeugs über eine bestimmte Wegstrecke ausreichend, die wiederum von der Ausdehnung des zu erfassenden Unterwasserareals in Fahrtrichtung abhängig ist. Bei den bekannten Verfahren ist die Ortsauflösung des Unterwasserareals in Fahrtrichtung von dem Öffnungswinkel und der Anzahl der Richtcharakteristiken oder Beams abhängig und verschlechtert sich mit zunehmender radialer Entfernung. Im Gegensatz dazu ist bei dem erfindungsgemäßen Verfahren die Ortsauflösung in Fahrtrichtung unabhängig von dem Öffnungswinkel der Richtcharakteristik und über die Entfernung konstant. Sie ist ausschließlich von der Größe des überstrichenen Aspektwinkelintervalls, also vom Sektorwinkel $\varphi_B$ des Empfangssektors der Empfangsantenne, abhängig, unter dem gleiche Punkte des Unterwasserareals während der vom Wasserfahrzeug zurückgelegten Fahrstrecke mit der Empfangsantenne "betrachtet" werden. Die erzielbare Ortsauflösung in Fahrtrichtung beträgt allgemein $\frac{c \cdot \tau}{2} / \sin \frac{\varphi_B}{2}$, wobei c die Schallgeschwindigkeit im Wasser und $\tau$ die Impulsdauer der Schallimpulse ist. Nichts desto weniger ist die Zahl der Messstellen und damit der Aspektwinkel innerhalb des Aspektwinkelintervalls hinreichend groß zu wählen.

Der Empfangssektor kann durch Beamforming oder Richtungsbildung von einer Mehrzahl von in der Fahrebene des Wasserfahrzeugs fächerartig aneinanderliegenden Beams oder Richtcharakteristiken überspannt sein, wodurch zwar der Abstand der Messstellen voneinander und damit die Fahrgeschwindigkeit des Unterwasserfahrzeugs vergrößert werden kann, nicht aber die Ortsauflösung in Fahrtrichtung verändert wird. Die Zahl der Aspektwinkel, unter dem ein Flächenelement im Unterwasserareal betrachtet wird, ist dann gleich der Zahl der Beams oder Richtcharakteristiken, in denen das Flächenelement erscheint und kann über den Abstand der Messstellen gesteuert werden. Sinnvollerweise wird der Abstand $A_y$ der Messstellen

$$A_y \leq \frac{\tan \frac{\varphi_B}{2}}{\tan\left(\frac{\varphi_B}{2K}\right)} \cdot \frac{c \cdot \tau}{2 \cdot \sin\left(\frac{\varphi_B}{2}\right)} \qquad (1)$$

gewählt, wobei K die Anzahl der Beams oder Richtcharakteristiken ist, die den Empfangssektor mit dem horizontalen Sektorwinkel $\varphi_B$ überdecken.

Beispielhaft sei ein Empfangssektor der Empfangsantenne mit einem Sektorwinkel $\varphi_B = 90°$ angenommen, der mit Schallimpulsen der Impulsdauer T = 0,1ms im Abstand $A_y$ der Messstellen voneinander beschallt wird. Die Empfangsantenne möge einen den Empfangssektor überdeckenden Beamfächer aus 10 Beams oder Richtcharakteristiken besitzen, die jeweils einen Öffnungswinkel von 9° aufweisen. Mit diesen Daten wird bei einer Schallgeschwindigkeit c = 1500m/s eine Ortsauflösung des Unterwasserareals in Fahrtrichtung innerhalb des Empfangssektors von 10,6cm unabhängig von der Entfernung erzielt. Der maximale Abstand $A_y$ der Messstellen voneinander, der nicht überschritten werden soll, beträgt ca. 1,35m.

Bei den bisher üblichen Verfahren, bei denen die Winkelauflösung des Unterwasserareals innerhalb des Empfangssektors durch den Öffnungswinkel $\varphi$ der Beams oder Richtcharakteristiken bestimmt wird, wird dagegen die gleiche Ortsauflösung in Fahrtrichtung von 10,6cm mit einer Empfangsantenne, bei der ein Beamfächer von etwa 150 Beams oder Richtcharakteristik mit jeweils einem Öffnungswinkel $\varphi = 0,6°$ ausgebildet ist, in einer Entfernung von 10m erreicht. Für eine gleiche Auflösung in einer Entfernung von 20m benötigt man bereits die doppelte Anzahl von Beams oder Richtcharakteristiken mit einem Öffnungswinkel von $\varphi = 0,3°$. Zur Halbierung des Öffnungswinkels müsste die Länge der Empfangsantenne bei gleicher Sendefrequenz verdoppelt werden. Dies macht deutlich, dass mit dem erfindungsgemäßen Verfahren bei ausreichend hoher Fahrgeschwindigkeit des Wasserfahrzeugs eine hohe, entfernungsunabhängige Winkelauflösung mit einer Empfangsantenne erzielt wird, deren Länge sehr viel Spielraum zur Anbringung auch an kleinen, z.B. autonomen oder ferngelenkten Unterwasserfahrzeugen bietet. Diese Ortsauflösung in Fahrtrichtung ist konstant und wird mit zunehmender Entfernung - anders als bei dem bekannten Verfahren - nicht schlechter. Umgekehrt betrachtet wird mit dem erfindungsgemäßen Verfahren mit einer Empfangsantenne herkömmlicher Länge eine sehr viel höhere Ortsauflösung in Fahrtrichtung erreicht als bei den bekannten Verfahren, die zudem noch entfernungskonstant ist.

Zweckmäßige Ausführungsformen des erfindungsgemäßen Verfahrens mit vorteilhaften Weiterbildungen und Ausgestaltungen der Erfindung ergeben sich aus den weiteren Ansprüchen. In vorteilhafter Weise wird durch eine interferometrische Messung, bei der vorzugsweise in Vertikalabstand zur ersten eine zweite Empfangsantenne eingesetzt wird, ein dreidimensionales Sonarbild rekonstruiert, das das Bodenprofil und Objekte auf dem Boden und im Wasservolumen des Unterwasserareal erkennbar macht.

Die Erfindung ist anhand von in der Zeichnung dargestellten Ausführungsbeispielen im folgenden näher beschrieben. Es zeigen:

Fig. 1       eine Rückansicht eines in einem Seegebiet fahrenden Wasserfahrzeugs mit einem Sonar zur Erfassung von Daten von einem Unterwasserareal, schematisiert dargestellt,

Fig. 2       ein Blockschaltbild der Senderseite des Sonars,

Fig. 3          ein Blockschaltbild der Empfängerseite des Sonars,

Fig. 4          eine schematische Darstellung eines Momentanzustands bei der Datenerfassung in Draufsicht,

Fig. 5          eine vergrößerte Darstellung des Ausschnitts V in Fig. 4,

Fig. 6 und 7    jeweils eine Illustration zur Erläuterung der Zuordnung von Flächenelement und Amplitudenwert des Filtersignals gemäß zweier Verfahrensvarianten,

Fig. 8          eine gleiche Darstellung wie in Fig. 4 mit modifizierter, vom Wasserfahrzeug zurückgelegter Wegstrecke,

Fig. 9          ein Blockschaltbild der Empfängerseite des Sonars gemäß einem weiteren Ausführungsbeispiel,

Fig. 10         eine Illustration zur Erläuterung des interferometrischen Messprinzips,

Fig. 11         ein Beispiel einer Übertragungsfunktion eines Filters im Blockschaltbild der Fig. 3.

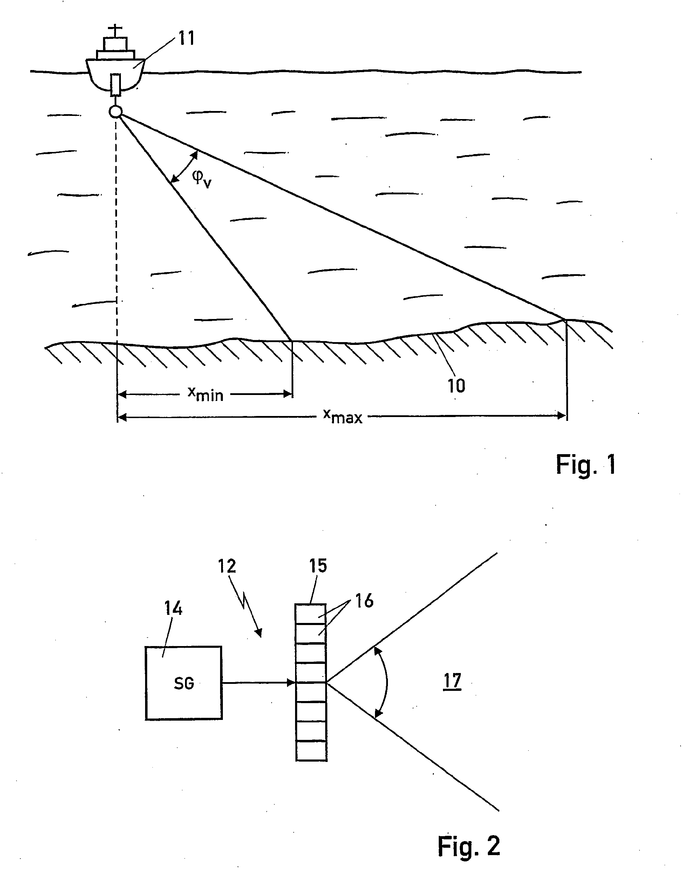

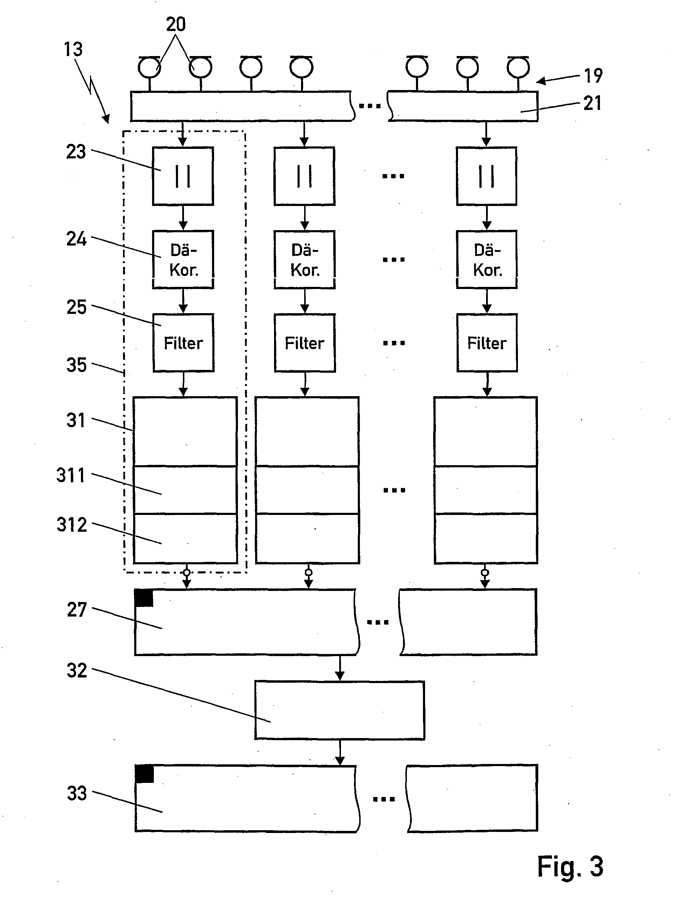

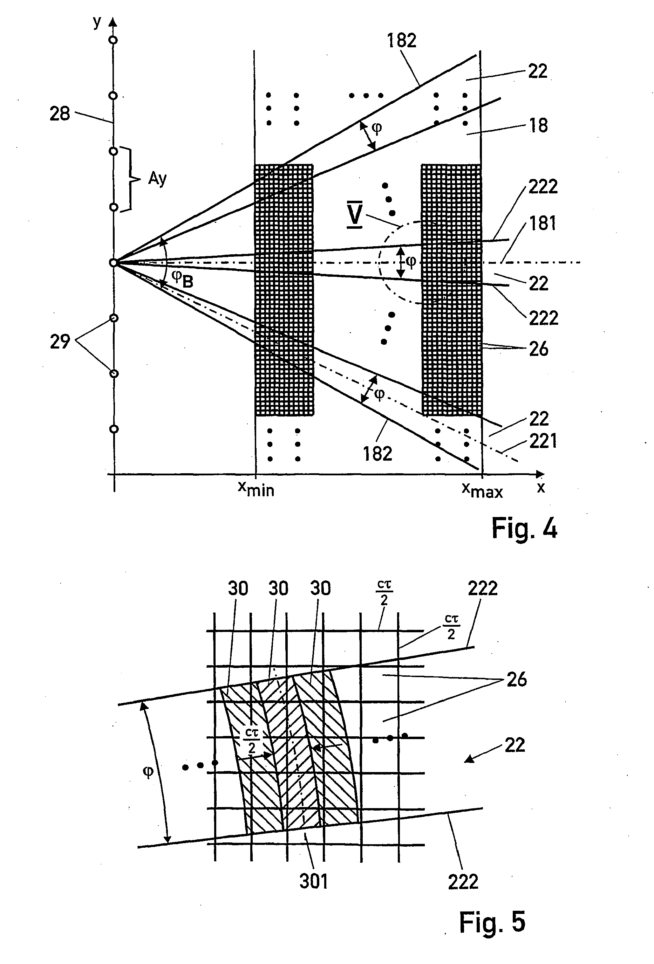

Bei dem nachstehend beschriebenen Verfahren zum Erzeugen eines Sonarbildes von einem Unterwasserareal wird ein von einem Wasserfahrzeug getragenes Sonar verwendet, das einen Schallsender 12 (Fig. 2) und einen Schallempfänger 13 (Fig. 3) aufweist. Der Schallsender 12 umfasst einen Sendeimpulsgenerator 14 und eine Sendeantenne 15, die eine Mehrzahl von auf einem Antennenträger angeordneten, elektroakustischen Wandlern 16 aufweist. Die vom Sendeimpulsgenerator 14 generierten, elektrischen Sendeimpulse werden von der Sendeantenne 15 als Schallimpulse in einen Sendesektor 17 abgestrahlt, dessen Raumwinkel mindestens gleich groß ist wie ein empfangsseitig im Unterwasserareal 10 aufgespannter Empfangssektor 18 mit dem in der Fahrebene liegenden Sektorwinkel, im folgenden horizontaler Sektorwinkel $\varphi_B$ genannt (Fig. 4), und dem senkrecht dazu ausgerichteten Sektorwinkel, im folgenden vertikaler Sektorwinkel $\varphi_V$ genannt (Fig. 1). Vorzugsweise wird der Raumwinkel des von der Sendeantenne 15 beschallten Sendesektors 17 größer als der des Empfangssektors 18 gewählt.

Der in Fig. 3 im Blockschaltbild dargestellte Schallempfänger 13 weist eine elektroakustische Empfangsantenne 19 aus einer Vielzahl von Hydrofonen 20 auf, die ebenfalls auf einem Antennenträger angeordnet sind. Zur Erzielung einer vertikalen Bündelung der Empfangsantenne 19, d.h. des vertikalen Sektorwinkels $\varphi_V$, sind vertikal untereinanderliegende Hydrofone 20 zu einem sog. Stave zusammengefasst. Jedes der in Fig. 3 dargestellten Hydrofone 20 ist damit Teil eines Stave. Alle Hydrofone 20 bzw. alle Staves werden gleichzeitig betrieben. Aus den elektrischen Ausgangssignalen der Hydrofone 20 werden in bekannter Weise durch Signalverarbeitung, der sog. Richtungsbildung oder dem sog. Beamforming, Gruppensignale aus unterschiedlichen Empfangsrichtungen mit jeweils maximaler Empfangsempfindlichkeit erhalten. Die maximale Empfangsempfindlichkeit der Empfangsantenne 19 wird auch als Richtcharakteristik oder Beam bezeichnet. Das Beamforming erfolgt im Beamformer 21 oder Richtungsbildner, wobei ein Fächer von aneinanderliegenden Beams oder Richtcharakteristiken entsteht. Im folgenden wird in Übereinstimmung mit dem fachüblichen Sprachgebrauch nur noch der Begriff Beams verwendet.

Der sich aus der Vielzahl der aneinanderliegenden Beams 22 ergebende Beamfächer (Fig. 4) überdeckt den Empfangssektor 18 des Schallempfängers 13. Jeder Beam 22 hat einen in der Fahrebene des Wasserfahrzeugs liegenden Öffnungswinkel, im folgenden horizontaler Öffnungswinkel $\varphi$ genannt (Fig. 4), und einen dazu senkrecht ausgerichteten Öffnungswinkel, im folgenden vertikaler Öffnungswinkel $\varphi_V$ genannt (Fig. 1). Zur Erzeugung der Gruppensignale der einzelnen Beams 22 werden die Ausgangssignale der Hydrofone 20 oder Staves verstärkt, mit einer Abtastfrequenz 1/T abgetastet und komplex weiterverarbeitet, wobei die einzelnen Abtastwerte oder Samples zeitrichtig verzögert und konphas zu komplexen Gruppensignalen addiert werden. Jedes der komplexen Gruppensignale wird wird komplex in die Basisbandlage gemischt und tiefpassgefiltert. Anschließend wird im Block 23 der Betrag des Tiefpassausgangssignals gebildet. Die aus Block 23 hervorgehenden zeitlichen Verläufe des Betrags werden im folgenden als Empfangssignale bezeichnet. Bei einer alternativen Ausführung des Verfahrens kann jedoch auch anstelle einer Betragsbildung eine Betragsquadratbildung vorgenommen und deren zeitliche Verläufe als Empfangssignale weiterverarbeitet werden. Auch können die komplexen Gruppensignale selbst, also unter Umgehung der vorstehend beschriebenen Basisbandmischung und der Betrags- bzw. Betragsquadratbildung, oder deren Realteil als Empfangssignale herangezogen werden.

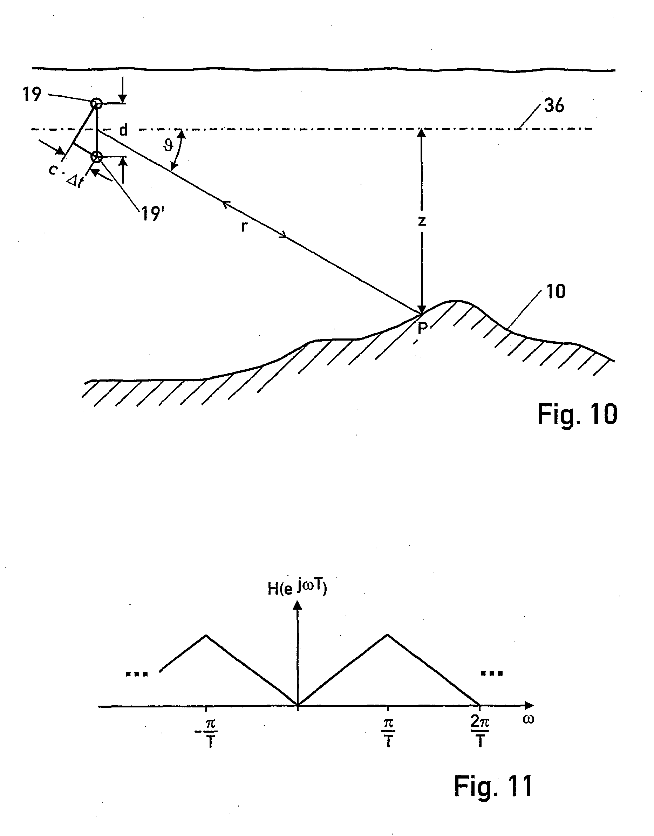

Die Empfangssignale werden im Block 24 mindestens einer Korrektur unterzogen, um z. B. die während des Hin- und Rücklaufs des Schallimpulses durch geometrische Dämpfung bedingte Abnahme der Amplitude der Ausgangssignale der Hydrofone 20 auszugleichen. Die korrigierten Empfangssignale werden im Filter 25 so gefiltert, dass niederfrequente Anteile des Betragssignals geringer bewertet werden als hochfrequente Anteile. Das Filter 25 hat hierzu eine hochpassähnliche Übertragungsfunktion mit einem ansteigenden, vorzugsweise linearen Verlauf über die Frequenz. Ein Beispiel für diese "hochpassähnliche" Filter 25 ist das sog. Rampenfilter. Im Falle der beschriebenen, digitalen Signalverarbeitung wird als Filter 25 ein lineares System verwendet, dessen periodische Übertragungsfunktion $H(e^{j\omega T})$ innerhalb der durch die halbe negative und halbe positive Abtastkreisfrequenz $-\pi/2T$ bzw. $+\pi/2T$ festgelegten Grenzen proportional dem Betrag der Kreisfrequenz $\omega$ ist und im Bereich $-\pi/2T$ bis 0 abfällt und im Bereich 0 bis $+\pi/2T$ ansteigt. Ein solches lineares System ist in Fig. 11 dargestellt. Die beschriebene Filterung des Betragssignals bewirkt, dass ein Filtersignal mit positiven und negativen Amplituden entsteht, das eine Rekonstruktion des Sonarbildes erlaubt. Eine weitere Tiefpassfilterung mit einer Übertragungsfunktion entsprechend einer Si-Funktion oder einer Fensterfunktion, beispielsweise mit einem Cosinus- oder Hamming-, Hanning- oder Tschebyscheff-Fenster, führt zu einer Verbesserung des Nutz/Störverhältnisses des Filtersignals.

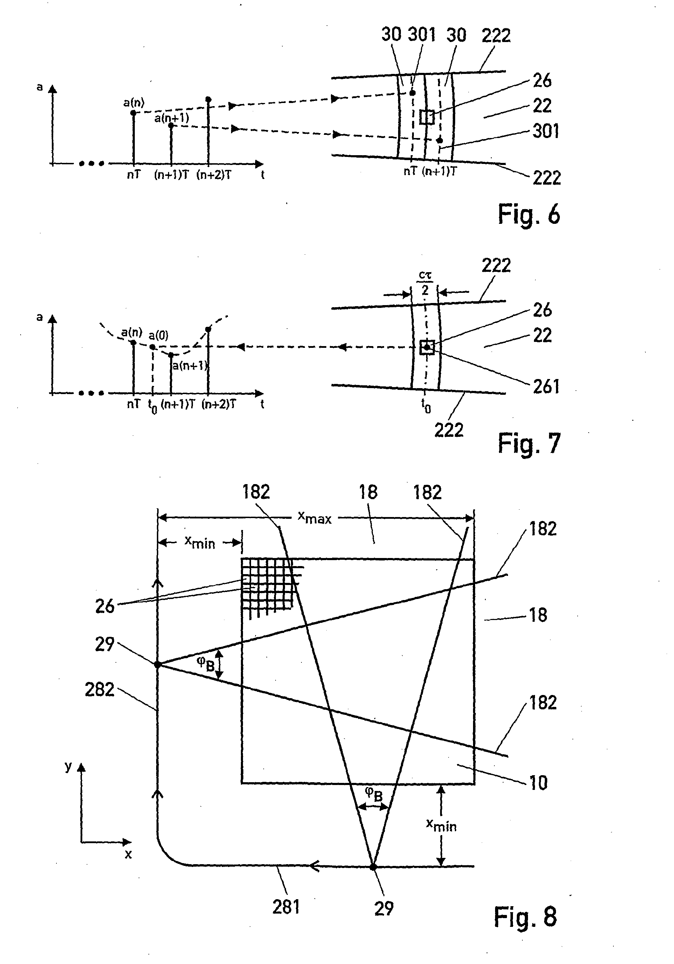

Zur Erzeugung eines Sonarbildes von einem Unterwasserareal 10, wie es beispielhaft in Fig. 4 schematisiert dargestellt ist, wird im Unterwasserareal 10 ein Feld aus einer Vielzahl von in Reihen und Spalten aneinandergereihten, Flächenelementen 26 definiert. Die Flächenelemente 26 sind vorzugsweise quadratisch mit einer Kantenlänge ausgebildet, die abhängig ist von der gewünschten oder maximal möglichen Radialauflösung. Im Falle des Aussendens von CW-Impulsen wird die Kantenlänge gleich oder kleiner $c\cdot\tau/2$ bemessen, wobei c die Schallgeschwindigkeit im Wasser und $\tau$ die Impulsdauer der von der Sendeantenne 15 abgestrahlten Schallimpulse ist. Die Kantenlänge kann größer als $c\cdot\tau/2$ gewählt werden, wenn das mit Fig. 6 illustrierte Verfahren für die Zuordnung von Amplitudenwerten des Filtersignals zu den Flächenelementen 26 eingesetzt wird.

Ein vergrößerter Ausschnitt des Flächenelement-Felds ist in Fig. 5 dargestellt. Jedem Flächenelement 26 ist ein Speicherplatz in einem Speichermedium 27, im folgenden kurz Speicher 27 genannt (Fig. 3), zugeordnet. Das Wasserfahrzeug 11 legt nunmehr eine im wesentlichen gerade Wegstrecke 28 zurück, die in Fig. 4 längs der Koordinate y verläuft. Die Empfangsantenne 19 ist so ausgerichtet, dass ihr Empfangssektor 18 im Ausführungsbeispiel nach Steuerbord weist. Dabei ist der Winkel, den die Mittelachse 181 oder Winkelhalbierende des Empfangssektors 18 mit der Längsachse des Wasserfahrzeugs 11 einschließt, im Ausführungsbeispiel mit 90° gewählt. Er kann jedoch auch von 90° abweichen. Beim Zurücklegen der Wegstrecke 28 überstreicht der Empfangssektor 18 mit der Vielzahl von darin aufgespannten Beams 22 das Unterwasserareal 10 in einer Breite $x_{max} - x_{min}$ (Fig. 1 und 4). In aufeinanderfolgenden, vorzugsweise äquidistanten Messstellen 29 längs der Wegstrecke 28 sendet die Sendeantenne 15 jeweils einen Schallimpuls mit der Impulsdauer $\tau$ aus. Die Empfangsantenne 19 empfängt die aus dem Unterwasserareal 10 zurückgestreuten Echosignale, die von dem Beamformer 21 als den Beams 22 zugeordnete komplexe Empfangssignale ausgegeben werden.

Die Gruppensignale werden in der vorstehend beschriebenen Weise signaltechnisch verarbeitet, so dass aus jedem Beam 22 - wie beschrieben - ein zeitdiskretes Filtersignal (Fig. 6 und 7) zur Verfügung steht. Mit den Filtersignalen aller Beams 22 wird das Sonarbild von Messstelle 29 zu Messstelle 29 sukzessiv rekonstruiert, so dass am Ende der Wegstrecke 28 ein komplettes Sonarbild des Unterwasserareals 10 erhalten wird. Hierzu werden in jeder Messstelle 29 in dem innerhalb des vom Öffnungswinkel $\varphi$ des Beams 22 eingegrenzten Bereichs des Flächenelement-Felds in Radialrichtung aneinanderliegende, kreisförmig gekrümmte Streifen 30 (Fig. 5) mit der radialen Bereite $c\cdot\tau/2$ definiert, die sich bis zu den Feldbereichsgrenzen, also bis zu den Begrenzungskanten 222 der Beams 22, erstrecken.

Die mittleren Krümmungsradien der Streifen 30 werden unter Berücksichtigung der Schallgeschwindigkeit c aus den diskreten Zeitwerten der Filtersignale berechnet. Der mittlere Krümmungsradius eines Streifens 30 entspricht dabei der Entfernung der Mittellinie 301 des Streifens 30 von dem Ort der Empfangsantenne 19. Letzterer liegt im Zentrierpunkt des Empfangssektors 18. In Fig. 5 und 6 ist dies illustriert. Beispielhaft ist ein vorderer Streifen 30 durch den diskreten Zeitwert nT des Filtersignals und ein an diesem anliegender, hinterer Streifen 30 gleicher radialer Breite durch den Zeitwert (n+1)T des Filtersignals festgelegt. Wie in Fig. 6 illustriert ist, wird jedem Flächenstreifen 30 der zu dem Zeitwert nT bzw. (n+1)T zugehörige Amplitudenwert des zeitdiskreten Filtersignals zugeordnet. Im Beispiel der Fig. 6 wird dem vorderen Streifen 30 aufgrund des Zeitwerts nT der Amplitudenwert a(n) und dem hinteren Streifen 30 aufgrund des Zeitwerts (n+1)T der Amplitudenwert a(n+1) zugeordnet. Wie aus Fig. 5 ersichtlich ist, überdeckt jeder Streifen 30 mehrere Flächenelemente 26 ganz oder teilweise. Für alle Flächenelemente 26, die ganz oder teilweise innerhalb des vorderen Streifens 30 liegen, wird der Amplitudenwert a(n) in diejenigen Speicherplätze im Speicher 27 eingeschrieben, die den ganz oder teilweise in dem vorderen Streifen 30 liegenden Flächenelementen 26 zugeordnet sind. Für alle Flächenelemente 26, die ganz oder teilweise innerhalb des hinteren Streifens 30 liegen, wird der Amplitudenwert a(n+1) in diejenigen Speicherplätze im Speicher 27 eingeschrieben, die den ganz oder teilweise in dem hinteren Streifen 30 liegenden Flächenelementen 26 zugeordnet sind, wobei in jedem Speicherplatz der Amplitudenwert auf einen bereits in diesem Speicherplatz vorhandenen Speicherwert, der aus anderen Beams 22 oder aus an vorherigen Messstellen 29 durchgeführten Messungen herrührt, aufaddiert wird. Dies wird für alle in radialer Richtung aneinanderliegenden Streifen 30 durchgeführt, die durch die diskreten Zeitwerte (n+2)T usw. festgelegt sind und denen dann die Amplitudenwerte a(n+2) usw. zugewiesen werden.

Die Amplitudenwerte werden aber nicht 1:1 allen Flächenelementen 26 innerhalb desselben Streifens 30 zugeordnet, sondern nur in einer ihre Lage innerhalb des Streifens 30 berücksichtigenden Weise, wozu die Amplitudenwerte vor ihrem Einschreiben in den Speicher 27 gewichtet werden. Die Wichtung erfolgt dabei in zweierlei Weise. Zum einen wird der Flächenanteil eines jeden Flächenelements 26, der vom Streifen 30 überdeckt wird, und zum andern die Empfangsempfindlichkeit des Beams 22 berücksichtigt, die von der Mittelachse 221 des Beams 22 zu den Beamkanten 221 hin abnimmt. Der beschriebene Vorgang der Rekonstruktion des Sonarbildes wird in der Schaltungsanordnung gemäß Fig. 3 im Block 31 für jeden Beam 22 durchgeführt, wobei im Unterblock 311 die Flächenwichtung durch Multiplikation des Amplitudenwerts mit einem Flächen-Wichtungsfaktor und im Unterblock 312 die Empfangsempfindlichkeits-Wichtung durch Multiplikation des Amplitudenwerts mit einem von der Empfangsempfindlichkeit des Beams 22 über seinem Öffnungswinkel φ ,die sogn. Beambreite, abgeleiteten Wichtungsfaktor durchgeführt wird.

In einer in Fig. 7 illustrierten Verfahrensvariante für die Zuordnung von Amplitudenwerten aus den zeitdiskreten Filtersignalen zu den einzelnen Flächenelementen 26 wird für jedes Flächenelement 26, das innerhalb des vom Beam 22 überdeckten Bereichs, also innerhalb des vom Öffnungswinkel φ des Beams 22 eingegrenzten Bereichs des Flächenelement-Felds, liegt, die Entfernung des Zentrums 261 des Flächenelements 26 zu dem Zentrierpunkt des Empfangssektors 18 bestimmt und aus der Entfernung mit der Schallgeschwindigkeit c ein Zeitwert $t_0$ berechnet. Aus dem zeitdiskreten Filtersignal wird zu dem Zeitwert $t_0$ ein zugehöriger Amplitudenwert a(0) entnommen. In dem in Fig. 7 dargestellten Beispiel liegt der Zeitwert $t_0$ zwischen den diskreten Zeitwerten nT und (n+1)T. In diesem Fall wird der Amplitudenwert a(0) für den Zeitwert $t_0$ durch Interpolation zwischen den Amplitudenwerten a(n) und a(n+1) ermittelt. Der durch Interpolation erhaltene Amplitudenwert a(0) wird dem Flächenelement 26 zugeordnet. Dieser Amplitudenwert a(0) wird entsprechend der Lage des Flächenelements im Beam 22 gewichtet, und zwar mit einem Wichtungsfaktor multipliziert, der die Empfangsempfindlichkeit des Beams 22 am Ort des Flächenelements 26 berücksichtigt. Dies wird für alle Flächenelemente 26 durchgeführt, die innerhalb des vom Öffnungswinkel φ des Beams 22 eingegrenzten Bereichs des Flächenelement-Felds liegen. Im Weiteren wird in gleicher Weise, wie beschrieben, verfahren, also Einschreiben der gewichteten Amplitudenwerte in die zugehörigen Speicherplätze und Aufaddieren zu den bereits vorhandenen Speicherwerten. Voraussetzung für diese Verfahrensvariante ist es, dass die Kantenlänge der quadratischen Flächenelemente 26 gleich oder kleiner bemessen wird als die radiale Auflösung, die in Fig. 7 durch eine vordere und eine hintere Begrenzungslinie verdeutlicht ist und im Ausführungsbeispiel c·τ/2 beträgt. Eine gegenüber c·τ/2 größere Kantenlänge der Flächenelemente 26 wie bei der Verfahrensvariante gemäß Fig. 6 ist nicht zulässig.

Die beschriebene Rekonstruktion wird bei ununterbrochener, vorzugsweise kontinuierlicher Fahrt des Wasserfahrzeugs 11 an allen Messstellen 29 längs der Wegstrecke 28 jeweils in allen Beams 22 durchgeführt, wobei die Messstellen 29 einen Abstand $A_y$ voneinander haben (Fig. 4). Der Maximalabstand $A_y$, der für eine ordnungsgemäße Datenerfassung nicht überschritten werden soll, ist von der Zahl der Beams 22 abhängig, die den Empfangssektor 18 überdecken und lässt sich grob abschätzten gemäß

$$A_y \leq \frac{\tan\frac{\varphi_B}{2}}{\tan\left(\frac{\varphi_B}{2K}\right)} \cdot \frac{c \cdot \tau}{2 \cdot \sin\left(\frac{\varphi_B}{2}\right)} \qquad (1),$$

wobei K die Anzahl der den Empfangssektor 18 mit dem Sektorwinkel $\varphi_B$ abdeckenden Beams 22 ist.

Am Ende der vom Wasserfahrzeug 10 zurückgelegten Wegstrecke 28 wird der Speicherinhalt des Speichers 27 im Block 32 normiert. Die Normierung wird in der Weise durchgeführt, dass jeder der in den Speicherplätzen des Speichers 27 enthaltenen Speicherwerte durch die Summe der Quadrate der in den jeweiligen Speicherwert eingegangenen Wichtungsfaktoren dividiert wird. Dabei ist der Wichtungsfaktor in der erstbeschriebenen Verfahrensvariante das Produkt aus Empfangsempfindlichkeits-Wichtungsfaktor und Flächen-Wichtungsfaktor und in der zweitbeschriebenen Verfahrensvariante allein der Emfangsempfindlichkeits-Wichtungsfaktor. Der normierte Speicherinhalt wird in einem Speichermedium 33 (Speicher 33 in Fig. 3) abgelegt, der damit das vollständige Sonarbild enthält, das mit computergraphischen Techniken auf einem Display optisch dargestellt werden kann.

In Fig. 8 ist schematisch eine Wegstrecke dargestellt, bei der das Unterwasserareal 10 aus senkrecht zueinander weisenden Aspektwinkelintervallen oder Sektorwinkeln $\varphi_B$ "betrachtet" wird. Die vom Wasserfahrzeug 11 zurückgelegte Wegstrecke ist dabei in zwei Streckenabschnitte 281 und 282 unterteilt, die rechtwinklig zueinander ausgerichtet sind. Jeder Steckenabschnitt 281, 282 ist so groß bemessen, dass jedes Flächenelement 26 im Flächenelement-Feld von jedem Streckenabschnitt 281, 282 aus mindestens einmal von den beiden zeitlichen Begrenzungskanten 182 des Empfangssektors 18 mit dem Sektorwinkel $\varphi_B$ überstrichen wird. Wie zu Fig. 4 beschrieben, kann der Empfangssektor 18 wieder von einer Vielzahl von Beams 22 überdeckt sein, um einen Abstand $A_y$ zwischen den Messstellen 29 zu erhalten, der eine ausreichend hohe Fahrgeschwindigkeit des Wasserfahrzeugs erlaubt. Das zu vermessende Unterwasserareal 10 wird bei der zurückgelegten Wegstrecke einmal längs des Streckenabschnitts 281 in x-Richtung und einmal längs des Streckenabschnitts 282 in y-Richtung abgetastet, so dass am Ende der Wegstrecke das Unterwasserareal 10 vollständig erfasst ist. Die beschriebene Ausführung der Wegstrecke 28 ist insbesondere dann von Vorteil, wenn der Sektorwinkel $\varphi_B$ der Empfangsantenne 19 bauartbedingt nur kleine Werte, z.B. 10°, besitzt. Zum Erzeugen der Sonarbilder ausgedehnter Unterwasserareale werden mehrere Wegstrecken, wie sie in Fig. 4 oder Fig. 8 dargestellt sind, hintereinandergereiht.

Für eine kartographische Vermessung des Bodenprofils eines Unterwasserareals 10 und/oder Darstellung räumlicher Objekte am Boden und/oder im Wasservolumen wird das vorstehend beschriebene Verfahren mit interferometrischen Messmethoden verknüpft, mit denen zu jedem Streupunkt im Unterwasserareal 10 dessen Vertikalkomponente ermittelt werden kann. Hierfür wird eine weitere Empfangsantenne 19' im Vertikalabstand von der ersten Empfangsantenne 19 angeordnet (Fig. 10). Die Sendeantenne 15 ist nach wie vor nahe an der ersten Empfangsantenne 19 positioniert, kann aber genauso gut nahe der zweiten Empfangsantenne 19' angeordnet sein. Die zweite Empfangsantenne 19' ist vorzugsweise identisch der ersten Empfangsantenne 19 ausgebildet.

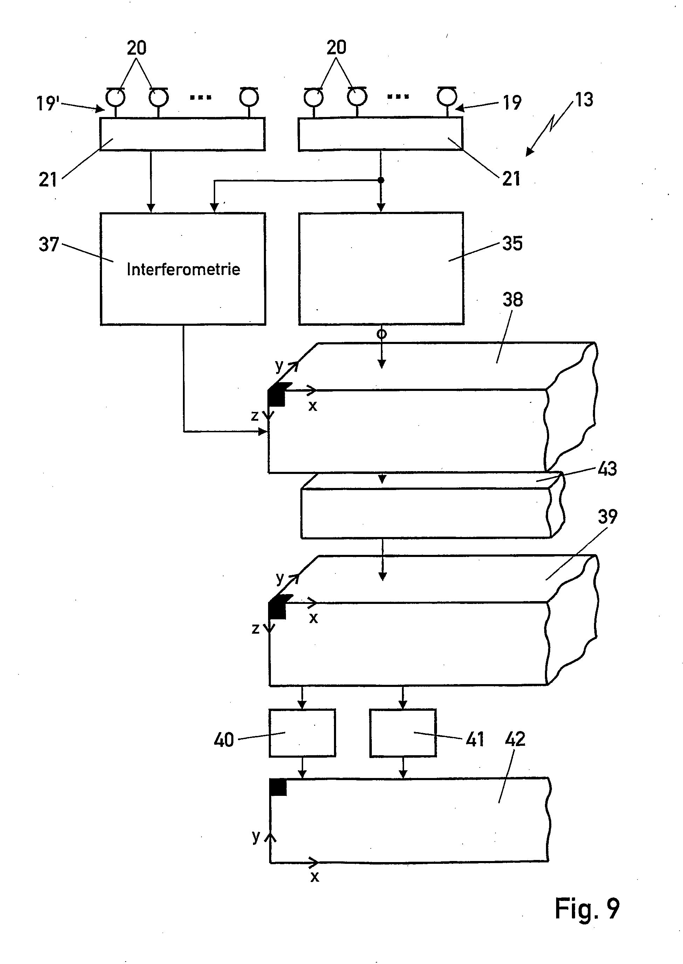

Die Schaltungsanordnung zur Erzeugung eines dreidimensionalen Sonarbilds ist in Fig. 9 dargestellt. In Fig. 10 ist das an sich bekannte Verfahren zur interferometrischen Vermessung der Vertikalkomponente eines Streupunktes P der Vollständigkeit halber illustriert. Aus der Zeitdifferenz $\Delta t$ des Empfangs des vom Punkt P zurückgestreuten Echosignals in den beiden Empfangsantennen 19 und 19' und der Entfernung r des Punktes P wird mit bekannten Methoden der Trigonometrie die Vertikalkomponente z des Streupunktes P bezogen auf eine Bezugsebene 36 gemäß

$$z = \frac{c \cdot \Delta t}{d} \cdot r \qquad\qquad (4),$$

berechnet, wobei d der Abstand der beiden Empfangsantennen 19, 19' voneinander ist. Die horizontale Bezugsebene 36 verläuft durch den Empfangsantennenort. Die Entfernung r wird aus der halben gemessenen Laufzeit des Schallimpulses von seinem Aussenden bis zu dem Empfang des daraus resultierenden Echosignals berechnet.

Das vorstehend beschriebene Verfahren zur Abtastung des Unterwasserareals 10 bis zu Beginn des Einschreibens der den Flächenelementen 26 zugeordneten, gewichteten Amplitudenwerte aus den zeitdiskreten Filtersignalen bleibt unverändert und wird für jeden Beam 22 in der Schaltungsanordnung gemäß Fig. 9 durch den Block 35 repräsentiert (vgl. auch den gleichen Block 35 in Fig. 3). Zusätzlich wird mittels interferometrischer Messung zu jedem Flächenelement 26 die auf die horizontale Bezugesebene 36 (Fig. 10) bezogene Vertikalkomponente bestimmt, die im folgenden Tiefenwert z genannt wird. Hierzu werden dem Block 37 für die Interferometrie die Empfangssignale eines jeden Beams 22 beider Empfangsantennen 19, 19' zugeführt. Im Block 37 wird z.B. durch Korrelation der Empfangssignale beider Empfangsantennen 19, 19' die Zeitdifferenz des Signalempfangs bestimmt und der Tiefenwert z gemäß G1. (4) berechnet. Am Ausgang des Blocks 37 steht für jedes der innerhalb eines Beams 22 liegenden Flächenelemente 26 ein zugehöriger Tiefenwert z an. In Abwandlung des vorstehend beschriebenen, weiterführenden Verfahrens wird nunmehr der jedem Flächenelement 26 zugeordnete, aus dem zeitdiskreten Filtersignal entnommene und gewichtete Amplitudenwert in einen solchen Speicherplatz eines dreidimensional adressierten Speichermedium 38, kurz Speichers 38 genannt, eingeschrieben, dessen vertikale Adresse dem Tiefenwert z des Flächenelements 26 entspricht. Mit anderen Worten: alle gewichteten Amplitudenwerte, die den in einer horizontalen Ebene liegenden Flächenelementen 26 zugeordnet sind, werden in x/y-adressierten Speicherplätzen eingeschrieben, die alle die gleiche vertikale Adresse z besitzen. Dies wird für jeden Beam 22 durchgeführt und in jeder Messstelle 29 wiederholt, wobei die gewichteten Amplitudenwerte beim Einschreiben wiederum auf die Speicherwerte aufaddiert werden, die bereits in den Speicherplätzen des dreidimensionalen Speichers 38 vorhanden sind. Die Anzahl der x/y-adressierten Speicherplätze, die in z-Richtung übereinanderliegen und eine Speichersäule im Speicher 38 bilden, wird anhand des vertikalen Öffnungswinkels $\varphi_v$ der Beams 22 (Fig. 1) und der Messgenauigkeit der interferometrischen Tiefenmessung festgelegt.

Am Ende der vom Wasserfahrzeug 10 zurückgelegten Wegstrecke 28 werden die Speicherwerte, die in den von den vertikal übereinanderliegenden Speicherplätzen des Speichers 38 gebildeten Speichersäulen enthalten sind, normiert (Block 43), wobei die Normierung in der vorstehend beschriebenen Weise erfolgt, indem der in jedem Speicherplatz enthaltene Speicherwert durch die Summe der Quadrate der in den jeweiligen Speicherwert eingegangenen Wichtungsfaktoren dividiert wird. Die so normierten Speicherwerte werden in einem dreidimensionalen Speichermedium 39 (Speicher 39 in Fig. 9) abgespeichert. Alle Speicherwerte, die innerhalb einer Speichersäule liegen, also die gleiche x/y-Adresse aufweisen, werden zu einem Intensitätswert kumuliert, z.B. addiert (Block 40). Außerdem wird nach statistischen Methoden aus den normierten Speicherwerten jeder Speichersäule ein Tiefenwert z für den Intensitätswert der Speichersäule berechnet (Block 41). Beispielsweise wird als Tiefenwert z der Schwerpunkt oder der Median der normierten Speicherwerte aus der Speichersäule berechnet und als Tiefenwert dem Intensitätswert zugeordnet. Intensitätswerte und Tiefenwerte werden in x/y-adressierten Speicherplätzen eines zweidimensionalen Speichermediums 42 (Speicher 42 in Fig. 9) abgespeichert, der damit ein Sonarbild einer 2D-Oberfläche des Bodens des Unterwasserareals 10 und von Objekten im Wasservolumen enthält. Der Speicherinhalt des Speichers 39 kann wiederum mit computergraphischen Techniken auf einem Display, z.B. dreidimensional, dargestellt werden.

Das vorstehend beschriebene Verfahren zur Abtastung des Unterwasserareals unter Einbeziehung der interferometrischen Messmethode kann dahingehend abgewandelt werden, dass im Unterwasserareal nicht ein Feld von Flächenelementen definiert wird, sondern ein Raumgebiet aus aneinander- und übereinanderliegenden Volumenelementen, die eine den Abmessungen der Flächenelemente 26 entsprechende Grund- und Deckfläche und eine vertikale Höhe aufweisen, die in der Größenanordnung von $c \cdot \tau/2$ liegt. Anstelle der Bildung der Streifen 30 im Beam 22 werden sphärisch gekrümmte Quader mit der radialen Breite $c \cdot \tau/2$ definiert, die sich über den Querschnitt der Beams 22 erstrecken. Die mittleren Krümmungsradien der sphärischen Quader werden - wie die Krümmungsradien der Streifen 30 - unter Berücksichtigung der Schallgeschwindigkeit aus den diskreten Zeitwerten der Filtersignale berechnet und die Amplituden der diskreten Zeitwerte anstelle den Flächenelemente 26 in gleicher Weise den Volumenelementen zugewiesen, wobei eine Beschränkung auf diejenigen Volumenelemente erfolgt, die in der Schichtebene liegen, deren Tiefe durch den momentan gemessenen Tiefenwert festgelegt ist. Vor der Einspeicherung der Amplitudenwerte in die den Volumenelementen zugeordneten Speicherplätze mit Aufaddierung auf bereits vorhandene Speicherwerte erfolgt ebenfalls die vorstehend beschriebene Gewichtung. Am Ende der Messfahrt werden die Speicherwerte wie vorstehend beschrieben verarbeitet, also normiert, der Intensitätswert kumuliert und nach statischen Methoden ein Tiefenwert für den Intensitätswert berechnet. Diese Verfahrensvariante hat den Vorteil, dass bei der Rekonstruktion die Krümmung der von der Sendeantenne sich kugelförmig ausbreitenden Schallwellen berücksichtigt wird und dadurch insbesondere im Nahbereich genauere Daten für die Bilderzeugung gewonnen werden.

In Abwandlung des beschriebenen Verfahrens kann der Empfangssektor 18 auch auf der Backbordseite oder mit zwei Empfangsantennen auf der Steuer- und Backbordseite des Wasserfahrzeugs 11 aufgespannt werden. Im letzteren Fall werden gleichzeitig Unterwasserareale auf beiden Seiten der Fahrtrichtung abgetastet. Auch kann es von Vorteil sein, wenn das Wasserfahrzeug 11 eine mäanderförmige Wegstrecke zurücklegt. Selbstverständlich ist es möglich, auf die Digitalisierung der Ausgangssignale der Hydrofone zu verzichten und das Verfahren auf Basis analoger Empfangssignale durchzuführen.

Das vorstehend beschriebene Verfahren kann auch dahingehend abgewandelt werden, dass anstelle eines Beamfächers nur ein Beam generiert wird, dessen horizontaler Öffnungswinkel $\varphi$ gleich dem horizontalen Sektorwinkel $\varphi_B$ ist. In diesem Fall muss der Abstand Ay der Messstellen 29 sehr viel kleiner sein, womit eine Reduktion der maximal möglichen Fahrgeschwindigkeit des Wasserfahrzeugs 11 einhergeht. Aber auch hier wird der horizontale Öffnungswinkel $\varphi_B$ des Empfangssektors 18 der Empfangsantenne 19 so groß gemacht, wie es die Einbauverhältnisse am Wasserfahrzeug zulassen.

Das vorstehend beschriebene Verfahren kann auch dahingehend abgeändert werden, dass anstelle eines Wasserfahrzeugs 11 ein Tauchgerät als Sonarträger verwendet wird, das eine vertikale Wegstrecke zurücklegt. In diesem Fall würde das gleiche Verfahren mit einem um 90° gedrehten Empfangssektor und einem entsprechend um 90° gedrehten Beamfächer durchgeführt werden.

## Patentansprüche

1.  Verfahren zum Erzeugen eines Sonarbildes von einem Unterwasserareal (10) unter Verwendung eines von einem Wasserfahrzeug getragenen Sonars, das eine Sendeantenne (15) zum Abstrahlen von Schallimpulsen und eine einen Empfangssektor (18) mit einem Sektorwinkel ($\varphi_B$) aufspannende Empfangsantenne (19) zum Empfangen von aus dem Unterwasserareal (10) zurückgestreuten Schallwellen aufweist, der von mindestens einer Richtcharakteristik mit vorgebbarem Öffnungswinkel ($\varphi$) überdeckt ist, bei dem folgende Verfahrensschritte durchgeführt werden:

    - im Unterwasserareal (10) wird ein Feld aus einer Vielzahl von in Reihen und Spalten aneinandergereihten Flächenelementen (26) definiert,
    - jedem Flächenelement (26) wird ein Speicherplatz in einem Speichermedium (27) zugeordnet,
    - das Wasserfahrzeug (11) mit dem nach Steuerbord und/oder Backbord weisenden Empfangssektor (18) wird über eine vorzugsweise geradlinige Wegstrecke (28) bewegt,
    - in aufeinanderfolgenden, vorzugsweise äquidistanten Messstellen (29) längs der Wegstrecke (28) wird jeweils ein Schallimpuls ausgesendet und nach Rückstreuung aus dem Unterwasserareal (10) über die Richtcharakteristik als Empfangssignal erfasst und gefiltert,
    - in jeder Messstelle (29) wird aus dem durch die Filterung (25) entstandenen Filtersignal für jedes Flächenelement (26), das innerhalb des vom Öffnungswinkel ($\varphi$) der Richtcharakteristik eingegrenzten Bereichs des Flächenelement-Felds liegt, anhand der Lage des Flächenelements (26) im Feldbereich ein Amplitudenwert ermittelt, indem im Feldbereich bis zu den Feldbereichsgrenzen sich erstreckende, in Radialrichtung aneinanderliegende, kreisförmig gekrümmte Streifen (30) mit einer vorgebbaren, radialen Breite gebildet werden, deren mittlere Krümmungsradien durch mit der Schallgeschwindigkeit multiplizierte, dem Filtersignal entnommene Zeitwerte festgelegt werden, und der zu jedem entnommenen Zeitwert zugehörige Amplitudenwert des Filtersignals jedem Flächenelement (26), das ganz oder teilweise innerhalb des durch den Zeitwert bestimmten Streifens (30) liegt, zugeordnet wird,
- der für jedes Flächenelement (26) ermittelte Amplitudenwert wird abhängig von der spezifischen Lage des jeweiligen Flächenelements (26) im Feldbereich gewichtet und
- die gewichteten Amplitudenwerte werden in die den Flächenelementen (26) zugeordneten Speicherplätze eingeschrieben und dabei auf einen im Speicherplatz bereits vorhandenen Speicherwert aufaddiert.

2. Verfahren nach Anspruch 1, bei dem die lagespezifische Wichtung der Amplitudenwerte der Flächenelemente (26) in der Weise durchgeführt wird, dass jeder einem Flächenelement (26) zugeordnete Amplitudenwert mit einem Flächen-Wichtungsfaktor, der den innerhalb des Streifens (30) liegenden Flächenanteil des Flächenelements (26) berücksichtigt, und/oder mit einem Empfangsempfindlichkeits-Wichtungsfaktor, der die Empfangsempfindlichkeit der Richtcharakteristik am Ort des Flächenelements (26) berücksichtigt, multipliziert wird.

3. Verfahren nach Anspruch 1 oder 2, bei dem die Flächenelemente (26) quadratisch mit einer Kantenlänge, die im Bereich einer gewünschten radialen Auflösung liegt, vorzugsweise gleich der radialen Auflösung ist, und die radiale Breite der Streifen (30) gleich der gewünschten radialen Auflösung bemessen wird.

4. Verfahren zum Erzeugen, eines Sonarbildes von einem Unterwasserareal (10) unter Verwendung eines von einem Wasserfahrzeug getragenen Sonars, das eine Sendeantenne (15) zum Abstrahlen von Schallimpulsen und eine einen Empfangssektor (18) mit einem Sektorwinkel ($\varphi_B$) aufspannende Empfangsantenne (19) zum Empfangen von aus dem Unterwasserareal (10) zurückgestreuten Schallwellen aufweist, der von mindestens einer Richtcharakteristik mit vorgebbarem Öffnungswinkel ($\varphi$) überdeckt ist, bei dem folgende Verfahrensschritte durchgeführt werden:

- im Unterwasserareal (10) wird ein Feld aus einer Vielzahl von in Reihen und Spalten aneinandergereihten Flächenelementen (26) definiert,
- jedem Flächenelement (26) wird ein Speicherplatz in einem Speichermedium (27) zugeordnet,
- das Wasserfahrzeug (11) mit dem nach Steuerbord und/oder Backbord weisenden Empfangssektor (18) wird über eine vorzugsweise geradlinige Wegstrecke (28) bewegt,
- in aufeinanderfolgenden, vorzugsweise äquidistanten Messstellen (29) längs der Wegstrecke (28) wird jeweils ein Schallimpuls ausgesendet und nach Rückstreuung aus dem Unterwasserareal (10) über die Richtcharakteristik als Empfangssignal erfasst und gefiltert
- in jeder Messstelle (29) wird aus dem durch die Filterung (25) entstandenen Filtersignal für jedes Flächenelement (26), das innerhalb des vom Öffnungswinkel ($\varphi$) der Richtcharakteristik eingegrenzten Bereichs des Flächenelement-Felds liegt, anhand der Lage des Flächenelements (26) im Feldbereich ein Amplitudenwert ermittelt, indem für jedes Flächenelement (26) innerhalb des Feldbereichs die Entfernung seines Zentrums (261) von dem Zentrierpunkt des Empfangssektors (18) bestimmt, daraus mit der Schallgeschwindigkeit ein Zeitwert berechnet wird und zu jedem Zeitwert aus dem Filtersignal ein dem Zeitwert zugehöriger Amplitudenwert entnommen und dem Flächenelement (26) zugewiesen wird,
- der für jedes Flächenelement (26) ermittelte Amplitudenwert wird abhängig von der spezifischen Lage des jeweiligen Flächenelements (26) im Feldbereich gewichtet und
- die gewichteten Amplitudenwerte werden in die den Flächenelementen (26) zugeordneten Speicherplätze eingeschrieben und dabei auf einen im Speicherplatz bereits vorhandenen Speicherwert aufaddiert.

5. Verfahren nach Anspruch 4, bei dem die lagespezifische Wichtung der Amplitudenwerte der Flächenelemente (26) in der Weise durchgeführt wird, das jeder einem Flächenelement (26) zugeordnete Amplitudenwert mit einem Empfangsempfindlichkeits-Wichtungsfaktor multipliziert wird, der die Empfangsempfindlichkeit der Richtcharakteristik am Ort des Flächenelements (26) berücksichtigt.

6. Verfahren nach Anspruch 4 oder 5, bei dem die Flächenelemente (26) quadratisch mit einer Kantenlänge, die kleiner oder gleich einer gewünschten radiale Auflösung ist, bemessen werden.

7. Verfahren nach einem der Ansprüche 1 bis 6, bei dem als Empfangssignale durch Richtungsbildung gewonnene, komplexe Gruppensignale verwendet werden.

8. Verfahren nach einem der Ansprüche 1 bis 6, bei dem als Empfangssignale der Zeitverlauf des Betrags oder des quadratischen Betrags von durch Richtungsbildung gewonnenen, komplexen Gruppensignalen verwendet werden.

9. Verfahren nach einem der Ansprüche 1 bis 6, bei dem als Empfangssignale die Realteile von durch Richtungsbildung gewonnenen Gruppensignalen verwendet werden.

10. Verfahren nach Anspruch 8, bei dem das Betragssignal mit einer Abtastfrequenz von 1/T abgetastet wird und die Filterung des zeitdiskreten Betragssignals mittels eines linearen Systems vorgenommen wird, dessen periodische Übertragungsfunktion H(e$^{j\omega T}$) innerhalb der durch die halbe negative und halbe positive Abtastkreisfrequenz (-π/2T bzw. +π/2T) festgelegten Grenzen proportional dem Betrag der Kreisfrequenz m ist und von der unteren Grenze bis Null abfällt und von Null bis zur oberen Grenze ansteigt.

11. Verfahren nach einem der Ansprüche 1 bis 3 und Anspruch 10, bei dem in dem Filtersignal diskrete Zeitwerte aufgesucht und mittels der Schallgeschwindigkeit die mittleren Krümmungsradien der den Zeitwerten zuzuordnenden Streifen (30) berechnet werden.

12. Verfahren nach einem der Ansprüche 4 bis 6 und Anspruch 10, bei dem in dem Filtersignal zu den für die Flächenelemente (26) berechneten Zeitwerten zugehörige Amplitudenwerte durch Interpolation gewonnen werden.

13. Verfahren nach einem der Ansprüche 1 bis 12, bei dem am Ende der vom Wasserfahrzeug (11) zurückgelegten Wegstrecke (28) der Speicherinhalt des Speichermediums (33) normiert wird.

14. Verfahren nach Anspruch 13, bei dem die Normierung in der Weise durchgeführt wird, dass jeder der in den Speicherplätzen enthaltenen Speicherwerte durch die Summe der Quadrate der in den jeweiligen Speicherwert eingegangen Wichtungsfaktoren dividiert wird.

15. Verfahren nach einem der Ansprüche 1 bis 14 bei dem die radiale Auflösung c·τ/2 ist, wobei c die Schallgeschwindigkeit im Wasser und τ die Impulsdauer der von der Sendeantenne (12) abgestrahlten Schallimpulse ist.

16. Verfahren nach einem der Ansprüche 1 bis 15, bei dem an jeder Messstelle (29) senkrecht zu einer horizontalen Bezugsebene (36) durch interferometrische Messung zu jedem Flächenelement (26) ein vertikaler Tiefenwert (z) bestimmt wird, dass die den Flächenelementen (26) zugeordneten, aus dem Filtersignal entnommenen Amplitudenwerte in solche Speicherplätze eines dreidimensional ausgebildeten Speichermediums (38) eingeschrieben werden, deren vertikale Adresse dem Tiefenwert (z) entspricht, und dass am Ende der vom Wasserfahrzeug (11) zurückgelegten Wegstrecke (28) die Speicherwerte, die in von vertikal übereinanderliegenden Speicherplätzen des Speichermediums (38) gebildeten Speichersäulen enthalten sind, normiert und zu einem Intensitätswert kumuliert werden und mit den normierten Speicherwerten in jeder Speichersäule nach statistischen Methoden der dem Intensitätswert zugehörige Tiefenwert (z) bestimmt wird.

17. Verfahren nach Anspruch 16, bei dem als Tiefenwert der Schwerpunkt oder Median der in einer Speichersäule enthaltenen Speicherwerte bestimmt wird.

18. Verfahren nach Anspruch 16 oder 17, bei dem die Bezugsebene (36) so festgelegt wird, dass der Schallempfangsort für die interferometrische Messung in der Bezugsebene (36) liegt.

19. Verfahren nach einem der Ansprüche 16 bis 18, bei dem die Anzahl der in einer Speichersäule vorhandenen Speicherplätze anhand des vertikalen Öffnungswinkels ($\varphi_v$) der Richtcharakteristik der Empfangsantenne (19) und der Messgenauigkeit der interferometrischen Tiefenmessung festgelegt wird.

20. Verfahren nach einem der Ansprüche 16 bis 19, bei dem zur interferometrischen Messung eine zweite Empfangsantenne (19') vorgesehen wird, die mit Vertikalabstand zur ersten Empfangsantenne (19) angeordnet wird, und die Tiefenwerte (z) durch Messen und Auswerten von Laufzeitdifferenzen zwischen den Empfangssignalen beider Empfangsantennen (19, 19') bestimmt werden.

21. Verfahren nach Anspruch 20, bei dem die Laufzeitdifferenzen durch Korrelation der Empfangssignale beider Empfangsantennen (19, 19') in einem Zeitfenster bestimmt werden, das jeweils um gleiche Zeitwerte der beiden Empfangssignale herum aufgespannt wird.

22. Verfahren nach einem der Ansprüche 17 bis 21, bei dem die Empfangsantennen (19, 19') gleich ausgebildet werden.

23. Verfahren nach einem der Ansprüche 1 bis 22, bei dem der Sektorwinkel ($\varphi_B$) des Empfangssektors so groß wie einbaubedingt möglich bemessen und der Öffnungswinkel (φ) der Richtcharakteristik der Empfangsantenne (19) gleich dem Sektorwinkel (φ_B) gewählt wird.

24. Verfahren nach einem der Ansprüche 1 bis 22, bei dem von der Empfangsantenne (19) eine Vielzahl von fächerartig aneinandergereihten Richtcharakteristiken mit vorzugsweise gleichem Öffnungswinkel (φ) aufgespannt wird, deren aufsummierte Öffnungswinkel (φ) gleich dem Sektorwinkel (φ_B) des Empfangssektors (18) bemessen wird und vorzugsweise der Sektorwinkel (φ_B) so groß wie einbaubedingt möglich bemessen wird.

25. Verfahren nach Anspruch 23 oder 24, bei dem die vom Wasserfahrzeug (11) zurückzulegende Wegstrecke (28) mindestens so groß bemessen wird, dass jedes Flächenelement (26) im Flächenelement-Feld mindestens einmal von jeder seitlichen Begrenzungskante (182) des Empfangssektors (18) überstrichen wird.

26. Verfahren nach Anspruch 25, bei dem die Wegstrecke (28) in zwei Streckenabschnitte (281, 282) unterteilt wird, die rechtwinklig zueinander ausgerichtet sind, und jeder Streckenabschnitt (281, 282) so groß bemessen wird, dass von jedem Streckenabschnitt (281, 282) aus jedes Flächenelement (26) im Flächenelement-Feld mindestens einmal von beiden seitlichen Begrenzungskanten (182) des Empfangssektors (18) überstrichen wird.

27. Verfahren nach Anspruch 25 oder 26, bei dem zum Erfassen eines größeren Seegebiets mehrere vom Wasserfahrzeug (11) zurückzulegende Wegstrecken (28) hintereinandergereiht werden.

28. Verfahren nach einem der Ansprüche 1 bis 27, bei dem die Mittelachse (181) des steuer- und/oder backbordweisenden Empfangssektors (18) unter einem Winkel von 90° zur Längsachse des Wasserfahrzeugs (11) ausgerichtet ist.

**Claims**

1. Method for production of a sonar image of an underwater area (10) using a sonar which is fitted to a watercraft and has a transmitting antenna (15) for emission of sound pulses and a receiving antenna (19), which covers a reception sector (18) with a sector angle (φ_B), for reception of soundwaves scattered back from the underwater area (10), which is covered by at least one directional characteristic with a predeterminable beam angle (φ), in which the following method steps are carried out:

   - a field comprising a multiplicity of area elements (26) which are arranged in rows and columns is defined in the underwater area (10),
   - each area element (26) is allocated a memory location in a memory medium (27),
   - the watercraft (11) is moved when the reception sector (18), which points to starboard and/or port, is moved over a preferably linear movement path (28),
   - a sound pulse is in each case emitted at successive, preferably equidistant measurement points (29) along the movement path (28) and, after scattering back from the underwater area (10), is detected and filtered via the directional characteristic as a received signal,
   - an amplitude value is determined at each measurement point (29) from the filter signal which results from the filtering (25) for each area element (26) which is located within the area of the area element field bounded by the beam angle (φ) of the directional characteristic, on the basis of the position of the area element (26) in the field area, in that strips (30) which extend as far as the field area, boundaries in the field area, are adjacent to one another in the radial direction and are curved in a circular shape are formed with a predeterminable radial width, the mean radii of curvature of which are defined by time values which are multiplied by the speed of sound and are taken from the filter signal, and the amplitude value of the filter signal associated with each time value that is taken is associated with each area element (26) which is located entirely or partially within the strip (30) defined by the time value,
   - the amplitude value determined for each area element (26) is weighted as a function of the specific position of the respective area element (26) in the field area, and
   - the weighted amplitude values are written to the memory locations allocated to the area elements (26) and in the process are added to a memory value which is already present in the memory location.

2. Method according to Claim 1, in which the position-specific weighting of the amplitude values of the area elements (26) is carried out in such a way that each amplitude value which is associated with an area element (26) is multiplied by an area weighting factor, which takes account of the component of the area of the area element (26) which is located within the strip (30), and/or by a reception sensitivity weighting factor, which takes account of the reception sensitivity of the directional characteristic at the location of the area element (26).

3. Method according to Claim 1 or 2, in which the area elements (26) are square with an edge length which is in the region of a desired radial resolution, and is preferably equal to the radial resolution, and the radial width of the strips (30) is designed to be equal to the desired radial resolution.

4. Method for production of a sonar image of an underwater area (10) using a sonar which is fitted to a watercraft and has a transmitting antenna (15) for emission of sound pulses and a receiving antenna (19), which covers a reception sector (18) with a sector angle ($\varphi_B$), for reception of soundwaves scattered back from the underwater area (10), which is covered by at least one directional characteristic with a predeterminable beam angle ($\varphi$), in which the following method steps are carried out:

   - a field comprising a multiplicity of area elements (26) which are arranged in rows and columns is defined in the underwater area (10),
   - each area element (26) is allocated a memory location in a memory medium (27),
   - the watercraft (11) is moved when the reception sector (18), which points to starboard and/or port, is moved over a preferably linear movement path (28),
   - a sound pulse is in each case emitted at successive, preferably equidistant measurement points (29) along the movement path (28) and, after scattering back from the underwater area (10), is detected and filtered via the directional characteristic as a received signal,
   - an amplitude value is determined at each measurement point (29) from the filter signal which results from the filtering (25) for each area element (26) which is located within the area of the area element field bounded by the beam angle ($\varphi$) of the directional characteristic, on the basis of the position of the area element (26) in the field area, in that, for each area element (26) within the field area, the distance of its centre (261) from the centre point of the reception sector (18) is determined, a time value is calculated from this using the speed of sound, and an amplitude value which is associated with the time value is taken from the filter signal for each time value and is assigned to the area element (26),
   - the amplitude value determined for each area element (26) is weighted as a function of the specific position of the respective area element (26) in the field area, and
   - the weighted amplitude values are written to the memory locations allocated to the area elements (26) and in the process are added to a memory value which is already present in the memory location.

5. Method according to Claim 4, in which the position-specific weighting of the amplitude values of the area elements (26) is carried out in such a way that each amplitude value which is associated with an area element (26) is multiplied by a reception sensitivity weighting factor which takes account of the reception sensitivity of the directional characteristic at the location of the area element (26).

6. Method according to Claim 4 or 5, in which the area elements (26) are square with an edge length which is less than or equal to a desired radial resolution.

7. Method according to one of Claims 1 to 6, in which complex array signals which are obtained by direction formation are used as received signals.

8. Method according to one of Claims 1 to 6, in which the time profile of the magnitude or of the square of the magnitude of complex array signals which are obtained by direction formation are used as received signals.

9. Method according to one of Claims 1 to 6, in which the real parts of array signals which are obtained by direction formation are used as received signals.

10. Method according to Claim 8, in which the magnitude signal is sampled using a sampling frequency of 1/T, and the filtering of the discrete-time magnitude signal is carried out by means of a linear system whose periodic transfer function H($e^{j\omega T}$) within the limits defined by half the negative and half the positive sampling circular frequency ($-\pi/2T$ and $+\pi/2T$, respectively) is proportional to the magnitude of the circular frequency $\omega$ and falls from the lower limit to zero, and rises from zero to the upper limit.

11. Method according to one of Claims 1 to 3 and Claim 10, in which discrete time values are searched for in the filter signal, and the mean radii of curvature of the strips (30) which can be associated with the time values are calculated by means of the speed of sound.

**12.** Method according to one of Claims 4 to 6 and Claim 10, in which amplitude values which are associated with the time values calculated for the area elements (26) are obtained by interpolation in the filter signal.

**13.** Method according to one of Claims 1 to 12, in which the memory content of the memory medium (33) is normalized at the end of the movement path (28) travelled by the watercraft (11).

**14.** Method according to Claim 13, in which the normalization process is carried out in such a way that each of the memory values contained in the memory locations is divided by the sum of the squares of the weighting factors entered in the respective memory value.

**15.** Method according to one of Claims 1 to 14, in which the radial resolution is $c \cdot \tau/2$ where c is the speed of sound in water, and $\tau$ is the pulse duration of the sound pulses emitted by the transmitting antenna (12).

**16.** Method according to one of Claims 1 to 15, in which a vertical depth value (z) is determined at each measurement point (29) at right angles to a horizontal reference plane (36) by interferometric measurement for each area element (26), in that the amplitude values which are associated with the area elements (26) and are taken from the filter signal are written to those memory locations in a three-dimensional memory medium (38) whose vertical address corresponds to the depth value (z) and in that, at the end of the movement path (28) travelled by the watercraft (11), the memory values which are contained in memory columns formed by memory locations located vertically one above the other in the memory medium (38) are normalized and are accumulated to form an intensity value, and the depth value (z) associated with the intensity value is determined using statistical methods from the normalized memory values in each memory column.

**17.** Method according to Claim 16, in which the centroid or median of the memory values contained in a memory column is defined as the depth value.

**18.** Method according to Claim 16 or 17, in which the reference plane (36) is defined such that the sound reception location for the interferometric measurement is located on the reference plane (36).

**19.** Method according to one of Claims 16 to 18, in which the number of memory locations in one memory column is defined on the basis of the vertical beam angle ($\varphi_v$) of the directional characteristic of the receiving antenna (19) and the measurement accuracy of the interferometric depth measurement.

**20.** Method according to one of Claims 16 to 19, in which a second receiving antenna (19') is provided for interferometric measurement and is arranged at a vertical distance from the first receiving antenna (19), and the depth values (z) are determined by measurement and evaluation of delay time differences between the signals received by the two receiving antennas (19, 19').

**21.** Method according to Claim 20, in which the delay time differences are determined by correlation of the signals received by the two receiving antennas (19, 19') in a time window which is in each case located around the same time values of the two received signals.

**22.** Method according to one of Claims 17 to 21, in which the receiving antennas (19, 19') are of identical design.

**23.** Method according to one of Claims 1 to 22, in which the sector angle ($\varphi_B$) of the reception sector is designed to be as large as the installation conditions allow, and the beam angle ($\varphi$) of the directional characteristic of the receiving antenna (19) is chosen to be equal to the sector angle ($\varphi_B$).

**24.** Method according to one of Claims 1 to 22, in which the receiving antenna (19) covers a multiplicity of directional characteristics which are adjacent to one another like a fan and preferably have the same beam angle ($\varphi$), the beam angle ($\varphi$) of which, when added up, are equal to the sector angle ($\varphi_B$) of the reception sector (18), and the sector angle ($\varphi_B$) is preferably designed to be as large as the installation conditions allow.

**25.** Method according to Claim 23 or 24, in which the movement path (28) travelled by the watercraft (11) is at least sufficiently long that each area element (26) in the area element field is covered at least once by each side boundary edge (182) of the reception sector (18).

**26.** Method according to Claim 25, in which the movement path (28) is subdivided into two distance sections (281, 282) which are aligned at right angles to one another, and each distance section (281, 282) is of such a size that from each distance section (281, 282) each area element (26) in the area element field is covered at least once by both side boundary edges (182) of the reception sector (18).

**27.** Method according to Claim 25 or 26, in which a plurality of movement paths (28) travelled by the watercraft (11) are located one behind the other in order to cover a larger sea area.

**28.** Method according to one of Claims 1 to 27, in which the centre axis (181) of the reception sector (18) which points to starboard and/or port is aligned at an angle of 90° to the longitudinal axis of the watercraft (11).


**Revendications**

**1.** Procédé pour générer une image sonar d'une surface sous-marine (10) en utilisant un sonar porté par un navire, lequel présente une antenne émettrice (15) pour émettre des impulsions sonores et une antenne réceptrice (19) englobant un secteur de réception (18) avec un angle de secteur ($\varphi_B$) pour recevoir les ondes sonores rétrodiffusées depuis la surface sous-marine (10), laquelle est recouverte par au moins une caractéristique directionnelle ayant un angle d'ouverture ($\varphi$) pouvant être prédéfini, les étapes suivantes étant exécutées :

- un champ constitué d'une pluralité d'éléments de surface (26) alignés les uns sur les autres en lignes et en colonnes est défini dans la surface sous-marine (10),
- un emplacement de mémoire dans un support de mémorisation (27) est affecté à chaque élément de surface (26),
- le navire (11) muni du secteur de réception (18) dirigé vers tribord et/ou bâbord se déplace sur une trajectoire (28) de préférence rectiligne,
- une impulsion sonore est à chaque fois émise à des points de mesure (29) successifs de préférence équidistants de la trajectoire (28), puis détectée et filtrée en tant que signal reçu sur la caractéristique directionnelle après rétrodiffusion depuis la surface sous-marine (10),
- à chaque point de mesure (29), le signal filtré obtenu par le filtrage (25) pour chaque élément de surface (26) qui se trouve à l'intérieur de la zone du champ d'éléments de surface délimitée par l'angle d'ouverture ($\varphi$) de la caractéristique directionnelle est utilisé pour déterminer une valeur d'amplitude au moyen de la position de l'élément de surface (26) dans la zone du champ en formant dans la zone du champ des bandes (30) courbées en forme de cercle ayant une largeur radiale pouvant être prédéfinie, disposées les unes contre les autres dans le sens radial et s'étendant jusqu'aux limites de la zone du champ, dont les rayons de courbure centraux sont définis par des valeurs de temps prélevées du signal filtré et multipliées par la vitesse du son, et la valeur de l'amplitude du signal filtré correspondant à chaque valeur de temps prélevée est associée à chaque élément de surface (26) qui se trouve entièrement ou partiellement à l'intérieur de la bande (30) définie par la valeur de temps,
- la valeur d'amplitude déterminée pour chaque élément de surface (26) est pondérée en fonction de la position spécifique de l'élément de surface (26) correspondant dans la zone du champ et
- les valeurs d'amplitude pondérées sont inscrites dans les emplacements de mémoire affectés aux éléments de surface (26) et additionnées à cette occasion à la valeur mémorisée déjà présente dans l'emplacement de mémoire.

**2.** Procédé selon la revendication 1, avec lequel la pondération spécifique à la position des valeurs d'amplitude des éléments de surface (26) est effectuée de telle sorte que chaque valeur d'amplitude associée à un élément de surface (26) est multipliée par un facteur de pondération de surface qui tient compte de la proportion de surface de l'élément de surface (26) qui se trouve à l'intérieur de la bande (30) et/ou par un facteur de pondération de sensibilité de réception qui tient compte de la sensibilité de réception de la caractéristique directionnelle à l'endroit de l'élément de surface (26).

**3.** Procédé selon la revendication 1 ou 2, avec lequel les éléments de surface (26) présentent une forme carrée avec une longueur de côté qui se trouve dans la plage d'une résolution radiale souhaitée, de préférence qui est égale à la résolution radiale, et la largeur radiale des bandes (30) est choisie égale à la résolution radiale souhaitée.

**4.** Procédé pour générer une image sonar d'une surface sous-marine (10) en utilisant un sonar porté par un navire, lequel présente une antenne émettrice (15) pour émettre des impulsions sonores et une antenne réceptrice (19) englobant un secteur de réception (18) avec un angle de secteur ($\varphi_B$) pour recevoir les ondes sonores rétrodiffusées depuis la surface sous-marine (10), laquelle est recouverte par au moins une caractéristique directionnelle ayant un angle d'ouverture ($\varphi$) pouvant être prédéfini, les étapes suivantes étant exécutées :

- un champ constitué d'une pluralité d'éléments de surface (26) alignés les uns sur les autres en lignes et en colonnes est défini dans la surface sous-marine (10),
- un emplacement de mémoire dans un support de mémorisation (27) est affecté à chaque élément de surface (26),
- le navire (11) muni du secteur de réception (18) dirigé vers tribord et/ou bâbord se déplace sur une trajectoire (28) de préférence rectiligne,
- une impulsion sonore est à chaque fois émise à des points de mesure (29) successifs de préférence équidistants de la trajectoire (28), puis détectée et filtrée en tant que signal reçu sur la caractéristique directionnelle après rétrodiffusion depuis la surface sous-marine (10),
- à chaque point de mesure (29), le signal filtré obtenu par le filtrage (25) pour chaque élément de surface (26) qui se trouve à l'intérieur de la zone du champ d'éléments de surface délimitée par l'angle d'ouverture ($\varphi$) de la caractéristique directionnelle est utilisé pour déterminer une valeur d'amplitude au moyen de la position de l'élément de surface (26) dans la zone du champ en déterminant pour chaque élément de surface (26) à l'intérieur de la zone du champ la distance de son centre (261) par rapport au point central du secteur de réception (18), en calculant à partir de celle-ci une valeur de temps avec la vitesse du son puis, pour chaque valeur de temps, en prélevant dans le signal filtré une valeur d'amplitude correspondant à la valeur de temps et en l'associant à l'élément de surface (26),
- la valeur d'amplitude déterminée pour chaque élément de surface (26) est pondérée en fonction de la position spécifique de l'élément de surface (26) correspondant dans la zone du champ et
- les valeurs d'amplitude pondérées sont inscrites dans les emplacements de mémoire affectés aux éléments de surface (26) et additionnées à cette occasion à la valeur mémorisée déjà présente dans l'emplacement de mémoire.

5. Procédé selon la revendication 4, avec lequel la pondération spécifique à la position des valeurs d'amplitude des éléments de surface (26) est effectuée de telle sorte que chaque valeur d'amplitude associée à un élément de surface (26) est multipliée par un facteur de pondération de sensibilité de réception qui tient compte de la sensibilité de réception de la caractéristique directionnelle à l'endroit de l'élément de surface (26).

6. Procédé selon la revendication 4 ou 5, avec lequel les éléments de surface (26) présentent une forme carrée avec une longueur de côté qui est inférieure ou égale à une résolution radiale souhaitée.

7. Procédé selon l'une des revendications 1 à 6, avec lequel les signaux reçus utilisés sont des signaux groupés complexes obtenus par calcul de la direction.

8. Procédé selon l'une des revendications 1 à 6, avec lequel les signaux reçus utilisés sont le tracé dans le temps de la valeur ou la valeur quadratique des signaux groupés complexes obtenus par calcul de la direction.

9. Procédé selon l'une des revendications 1 à 6, avec lequel les signaux reçus utilisés sont les parties réelles des signaux groupés obtenus par calcul de la direction.

10. Procédé selon la revendication 8, avec lequel le signal de valeur est échantillonné avec une fréquence d'échantillonnage de 1/T et le filtrage du signal de valeur discret dans le temps est effectué au moyen d'un système linéaire dont la fonction de transfert périodique $H(e^{j\omega T})$ à l'intérieur des limites définies par la demie fréquence circulaire d'échantillonnage négative et positive ($-\pi/2T$ ou $+\pi/2T$) est proportionnelle à la valeur de la fréquence circulaire $\omega$ et chute depuis la limite inférieure jusqu'à zéro et croît de zéro à la limite supérieure.

11. Procédé selon l'une des revendications 1 à 3 et selon la revendication 10, avec lequel des valeurs de temps discrètes sont recherchées dans le signal filtré et les rayons de courbure moyens des bandes (30) à associer aux valeurs de temps sont calculés au moyen de la vitesse du son.

12. Procédé selon l'une des revendications 4 à 6 et selon la revendication 10, avec lequel les valeurs d'amplitude correspondant aux valeurs de temps calculées pour les éléments de surface (26) sont obtenues par interpolation dans le signal filtré.

**13.** Procédé selon l'une des revendications 1 à 12, avec lequel le contenu mémorisé du support de mémorisation (33) est réduit à la fin de la trajectoire (28) parcourue par le navire (11).

**14.** Procédé selon la revendication 13, avec lequel la réduction est effectuée de telle sorte que chaque valeur mémorisée contenue dans les emplacements de mémoire est divisée par la somme des carrés des facteurs de pondération respectivement intervenus dans la valeur mémorisée correspondante.

**15.** Procédé selon l'une des revendications 1 à 14, avec lequel la résolution radiale est égale à $c \cdot \tau / 2$, c étant la vitesse du son dans l'eau et $\tau$ la durée de l'impulsion sonore émise par l'antenne émettrice (12).

**16.** Procédé selon l'une des revendications 1 à 15, avec lequel une valeur de profondeur verticale (z) pour chaque élément de surface (26) est déterminée à chaque point de mesure (29) perpendiculairement à un plan de référence horizontal (36) par mesure interférométrique, les valeurs d'amplitude associées aux éléments de surface (26) et prélevées du signal filtré sont inscrites dans les emplacements de mémoire d'un support de mémorisation (38) à configuration tridimensionnelle dont l'adresse verticale correspond à la valeur de profondeur (z) et à la fin de la trajectoire (28) parcourue par le navire (11), les valeurs mémorisées qui se trouvent dans des colonnes de mémoire formées par les emplacements de mémoire superposés dans le sens vertical du support de mémorisation (38) sont réduites et totalisées pour former une valeur d'intensité et la valeur de profondeur (z) correspondant à la valeur d'intensité est déterminée avec les valeurs mémorisées réduites dans chaque colonne de mémoire d'après des méthodes statistiques.

**17.** Procédé selon la revendication 16, avec lequel la valeur de profondeur déterminée est le barycentre ou la médiane des valeurs mémorisées contenues dans une colonne de mémoire.

**18.** Procédé selon la revendication 16 ou 17, avec lequel le plan de référence (36) est défini de telle sorte que le lieu de réception du son pour la mesure interférométrique se trouve dans le plan de référence (36).

**19.** Procédé selon l'une des revendications 16 à 18, avec lequel le nombre d'emplacements de mémoire présents dans une colonne de mémoire est déterminé au moyen de l'angle d'ouverture vertical ($\varphi_v$) de la caractéristique direction-nelle de l'antenne réceptrice (19) et de la précision de mesure de la mesure de profondeur interférométrique.

**20.** Procédé selon l'une des revendications 16 à 19, avec lequel une deuxième antenne réceptrice (19') est prévue pour la mesure interférométrique, laquelle est disposée avec un écart vertical par rapport à la première antenne réceptrice (19), et les valeurs de profondeur (z) sont déterminées en mesurant et en interprétant les différences de temps de propagation entre les signaux reçus des deux antennes réceptrices (19, 19').

**21.** Procédé selon la revendication 20, avec lequel les différences de temps de propagation sont déterminées par corrélation des signaux reçus des deux antennes réceptrices (19, 19') dans un créneau temporel qui s'étend à chaque fois sur les mêmes valeurs de temps autour des deux signaux reçus.

**22.** Procédé selon l'une des revendications 17 à 21, avec lequel les antennes réceptrices (19, 19') présentent la même configuration.

**23.** Procédé selon l'une des revendications 1 à 22, avec lequel l'angle de secteur ($\varphi_B$) du secteur de réception est réalisé aussi grand que le permet le montage et l'angle d'ouverture ($\varphi$) de la caractéristique directionnelle de l'antenne réceptrice (19) est choisi égal à l'angle de secteur ($\varphi_B$).

**24.** Procédé selon l'une des revendications 1 à 22, avec lequel l'antenne réceptrice (19) couvre une pluralité de caractéristiques directionnelles alignées les unes sur les autres à la manière d'un éventail et ayant de préférence les mêmes angles d'ouverture ($\varphi$), dont l'angle d'ouverture ($\varphi$) total est choisi égal à l'angle de secteur ($\varphi_B$) du secteur de réception (18) et l'angle de secteur ($\varphi_B$) est de préférence réalisé aussi grand que le permet le montage.

**25.** Procédé selon la revendication 23 ou 24, avec lequel la trajectoire (28) parcourue par le navire (11) est choisie au moins suffisamment grande pour que chaque élément de surface (26) dans le champ d'éléments de surface soit balayé au moins une fois par chaque bord de délimitation latéral (182) du secteur de réception (18).

**26.** Procédé selon la revendication 25, avec lequel la trajectoire (28) est divisée en deux sections de distance (281, 282) qui sont dirigées perpendiculairement l'une à l'autre et chaque section de distance (281, 282) est choisie suffisamment grande pour que chaque section de distance (281, 282) soit balayée au moins une fois par les deux bords de délimitation latéraux (182) du secteur de réception (18) depuis chaque élément de surface (26) dans le champ d'éléments de surface.

27. Procédé selon la revendication 25 ou 26, avec lequel plusieurs trajectoires (28) à parcourir par le navire (11) sont alignées les unes derrière les autres en vue d'acquérir une région maritime plus grande.

28. Procédé selon l'une des revendications 1 à 27, avec lequel l'axe central (181) du secteur de réception (18) dirigé vers tribord et/ou bâbord est orienté selon un angle de 90° par rapport à l'axe longitudinal du navire (11).

φ_V

x_min

x_max

10

11

**Fig. 1**

12

14

SG

15

16

17

**Fig. 2**

Fig. 3

Fig. 4

Fig. 5

Fig. 6

Fig. 7

Fig. 8

Fig. 9

Fig. 10

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4288866 A
- US 5200931 A
- WO 02059645 A2
- US 6897802 B1

**In der Beschreibung aufgeführte Nicht-Patentliteratur**

- **BRIAN G. FERGUSON.** Application of acoustic reflection tomography to sonar imaging. *J. Acoust. Soc. Am.,* Mai 2005, vol. 117 (5), 2915-2928